# EUROPEAN PATENT APPLICATION

(11) **EP 4 644 445 A1**
(43) Date of publication of application: **05.11.2025**
(21) Application number: 24305676.9
(22) Date of filing: 30.04.2024
(51) Int. Cl.: C08G 18/08, C08G 18/48, C08G 18/71, C08G 18/83, C09D 175/04, C09J 171/02, C09J 175/04, C09J 183/06, C08K 3/26

(54) **USE OF A CURABLE COMPOSITION AT LOW TEMPERATURE**

(71) Applicant: Bostik SA, 92800 Puteaux (FR)
(72) Inventor: OUWERKERK, Henk-Jan, 4903 C Oosterhout (NL); Klaas, Veen, 4903 C Oosterhout (NL)
(74) Representative: Arkema Patent

(57) **Abstract**

The present invention relates to the use of a curable composition for sealing, coating or bonding at a curing temperature ranging from -1°C to - 25°C,
said curable composition comprising:
- from 15% to 65% by weight of one or several silane-functional polymer P comprising at least one functional group having formula (I):

-C(O)-N(R₆)-R³-Si(R⁴)ₚ(OR⁵)₃₋ₚ (I)

- from 5% to 40% by weight of one or several plasticizer;
- from 1% to 25% by weight of fumed silica;
- optionally calcium carbonate.

## Description

The present invention relates to the use of a curable composition for sealing, coating or bonding at a curing temperature ranging from -1°C to -25°C.

The present invention also relates to a specific curable composition.

### BACKGROUND

Use of compositions curable at low temperature are desirable in many applications. For example, such compositions are, in at least some cases, preferable over, for example, thermally-cured or radiation cured compositions because (i) little or no energy is required to cure the composition, (ii) the materials from which some substrates are constructed cannot withstand elevated temperature cure conditions, and/or (iii) large or complex articles to be coated may not be convenient for processing through thermal or radiation cure equipment.

There also exist a need for curable composition that can be used in countries where the temperatures are below 0°C (so applications and curing occurs at low temperature for example at a curing temperature ranging from -1°C to -25°C).

Polyurethane based curable composition curable at ambient temperature or even low temperature are common. However, a major concern with this type of curing composition is human exposure and proper safety when handling isocyanate-based materials, particularly low molecular weight isocyanate.

There is a need for new composition curable, in particular moisture cure composition, which overcome at least one of the drawbacks mentioned above.

More particularly, there is a need for new composition curable at low temperature (such as for example from -1°C to -25°C).

There is also a need for new composition curable at low temperature (such as for example from -1°C to -25°C) and which exhibits a fast strength at low or ambient temperatures), and which are preferably transparent.

### DESCRIPTION OF THE INVENTION

### A. Use

The present invention relates to the use of a curable composition for sealing, coating or bonding at a curing temperature ranging from -1°C to - 25°C,
said curable composition comprising:
- from 15% to 65% by weight of one or several silane-functional polymer P comprising at least one functional group having formula (I):

   -C(O)-N(R₆)-R³-Si(R⁴)ₚ(OR⁵)₃₋ₚ (I)

   wherein
   - R⁴, identical or different, is each a linear or branched monovalent hydrocarbon radical having from 1 to 10 carbon atoms;
   - R⁵, identical or different, is each a linear or branched monovalent hydrocarbon radical having from 1 to 10 carbon atom;
   - or two radicals R⁵ may form a cycle;
   - R³ is a linear or branched divalent hydrocarbon radical having from 1 to 12 carbon atoms, optionally comprising at least one heteroatom, and optionally comprising cyclic and/or aromatic moieties;
   - R⁶ is a hydrogen atom, a linear or branched alkyl, an arylalkyl, or a cycloalkyl having from 1 to 20 carbon atoms;
   - p is 0, 1 or 2;
- from 5% to 40% by weight of one or several plasticizer;
- from 1 % to 25% by weight of fumed silica;
- optionally calcium carbonate.

Preferably, the present invention relates to the use of said curable composition for sealing, coating or bonding at a curing temperature ranging from -5°C to -25°C.

### Silane-functional polymer P

The curable composition comprises from 15% to 65% by weight of one or several silane-functional polymer P.

The silane-functional polymer P comprises at least one functional group having formula (I):

-C(O)-N(R₆)-R³-Si(R⁴)ₚ(OR⁵)₃₋ₚ (I)

wherein
- R⁴, identical or different, is each a linear or branched monovalent hydrocarbon radical having from 1 to 10 carbon atoms, preferably methyl or ethyl;
- R⁵, identical or different, is each a linear or branched monovalent hydrocarbon radical having from 1 to 10 carbon atom; preferably from 1 to 5 carbon atoms, more particularly R⁵ being methyl or ethyl;
- or two radicals R⁵ may form a cycle;
- R³ is a linear or branched divalent hydrocarbon radical having from 1 to 12 carbon atoms, optionally comprising at least one heteroatom, and optionally comprising cyclic and/or aromatic moieties;
- R⁶ is a hydrogen atom, a linear or branched alkyl, an arylalkyl, or a cycloalkyl having from 1 to 20 carbon atoms;
- p is 0, 1 or 2.

Preferably, the silane-functional polymer comprises at least two groups of formula (I).

The groups having the formula (I) may be located at a main chain end, or at a side chain end, or at both ends. Preferably, the groups of formula (I) are located at main chain ends.

According to the invention, the silane-functional polymer P may have a polyether backbone, a polyester backbone, a poly(ether-ester) backbone, a polyolefin backbone, a polycaprolactone backbone, a polycarbonate backbone, a poly(ether-carbonate) backbone, a poly(meth)acrylate backbone, a polyacetal backbone, a polythioether backbone, a polyurethane backbone.

Preferably, the silane-functional polymer P has a polyether backbone.

The silane-functional polymer P may have a number-average molecular weight ranging from 500 to 100 000 g/mol, preferably ranging from 700 to 50 000 g/mol, more preferably from 1 000 to 30 000 g/mol, in particular from 1 000 to 22 000 g/mol.

The number-average molecular weight of the silane-functional polymer P can be measured by methods well known to those skilled in the art, for example by steric exclusion chromatography (SEC) using polystyrene type standards.

Preferably, the silane-functional polymer P comprises at least one, preferably at least two, functional group having formula (I-A) or (I-B):

-O-C(O)-N(R₆)-R³-Si(R⁴)ₚ(OR⁵)₃₋ₚ (I-A)

-NH-C(O)-N(R₆)-R³-Si(R⁴)ₚ(OR⁵)₃₋ₚ (I-B)

wherein R³, R⁴, R⁵, R⁶ and p are as defined herein for the group of formula (I).

### Polymer P1

In one embodiment the silane-functional polymer P is a silane-functional polyurethane polymer P1 which is obtainable by the reaction of a silane having at least one group that is reactive toward isocyanate groups with a polyurethane polymer which contains isocyanate groups.

This reaction is preferably carried out in an excess of isocyanate groups.

In the reaction of the silane containing at least one group that is reactive toward isocyanate groups with a polyurethane polymer which contains isocyanate groups, the silane may in principle, albeit not preferably, be used in substoichiometric quantities, to give a silane-functional polymer which contains both silane groups and isocyanate groups.

For example, the silane which contains at least one group that is reactive toward isocyanate groups is a mercaptosilane or an aminosilane, more particularly an aminosilane.

Preferably, the aminosilane has the following formula (II):

R⁶-NH-R³-Si(R⁴)ₚ(OR⁵)₃₋ₚ (II)

wherein R³, R⁴, R⁵, R⁶ and p are as defined above for the silane group of formula (I).

Examples of suitable aminosilanes of formula (II) are primary aminosilanes such as for example 3-aminopropyltrimethoxysilane, 3-aminopropyldimethoxymethylsilane; secondary aminosilanes such as for example N-butyl-3-aminopropyltrimethoxysilane, N-phenyl-3-aminopropyltrimethoxysilane; the products of the Michael-like addition of primary aminosilanes such as for example 3-aminopropyltrimethoxysilane or 3-aminopropyldimethoxymethylsilane with Michael acceptors such as for example acrylonitrile, acrylic esters, acrylamides, maleic diesters, methylene malonate diesters, itaconic diesters, e.g., dimethyl and diethyl N-(3-trimethoxysilylpropyl)aminosuccinate; and also analogs of the stated aminosilanes having ethoxy groups instead of the methoxy groups on the silicon, preferably having ethoxy groups.

Typically, Michael acceptors are compounds which contain double bonds activated by electron acceptor radicals and which are therefore able to enter with primary amino groups (NH₂ groups) into nucleophilic addition reactions in a manner analogous to Michael addition (hetero-Michael addition).

Examples of polyurethane polymer containing isocyanate groups for producing a silane-functional polyurethane polymer P1 are polymers obtainable by the reaction of at least one polyol with at least one polyisocyanate, more particularly a diisocyanate. This reaction may be accomplished by bringing the polyol and the polyisocyanate to reaction with customary methods, as for example from temperatures of 50°C to 100°C, optionally in a presence of catalyst(s), the polyisocyanate being metered such that these isocyanate groups are in a stoichiometric excess in relation to the hydroxyl groups of the polyol.

The excess of polyisocyanate is selected in particular such that the amount of free isocyanate groups present in the resulting polyurethane polymer after the reaction of all of the hydroxyl groups of the polyol is from 0.1 to 5 wt % NCO, preferably 0.1 to 2.5 wt % NCO, more preferably 0.1 to 1 wt % NCO, based on the total weight of the polymer.

Preferred polyurethane polymers are those having the stated amount of free isocyanate groups and obtained from the reaction of diisocyanates with high molecular mass diols in an NCO/OH molar ratio of 1.5 to 2.2.

Suitable polyols for preparing the polyurethane polymer are, in particular, polyether polyols, polyester polyols, poly(ether-carbonate) and polycarbonate polyols, and also mixtures of these polyols. Particularly suitable are polyoxyethylene polyols (PEG), polyoxypropylene polyols (PPG), polyoxybutylene polyols (PBG) and poly(oxyethylene-oxypropylene) polyols more particularly polyoxypropylene diols, poly(oxyethylene-oxypropylene) diols, polyoxypropylene triols and poly(oxyethylene-oxypropylene) triols.

Preferred polyether polyols are polyoxyalkylene diols or polyoxyalkylene triols having a degree of unsaturation of less than 0.02 meq/g and having an average molecular weight in the range from 1 000 to 30 000 g/mol, and also polyoxyethylene diols, polyoxyethylene triols, polyoxypropylene diols, and polyoxypropylene triols having an average molecular weight of 400 to 22 000 g/mol. Likewise particularly suitable are so-called ethylene oxide-terminated ("EO-endcapped", ethylene oxide-endcapped) polyoxypropylene polyols.

Additionally suitable polyols may be polybutadiene polyols terminated with hydroxyl groups, examples being those polyols which are prepared by polymerization of 1,3-butadiene and allyl alcohol or by oxidation of polybutadiene, and also their hydrogenation products.

Additionally suitable polyols may be styrene-acrylonitrile-grafted polyether polyols, as available commercially for example under the trade name Lupranol^{®} from Elastogran GmbH, Germany.

Particularly suitable polyester polyols are polyesters which carry at least two hydroxyl groups and are prepared by known methods, in particular by polycondensation of hydroxycarboxylic acids or polycondensation of aliphatic and/or aromatic polycarboxylic acids with dihydric or polyhydric alcohols.

Preferred polycarbonate polyols are those as obtainable by reaction, for example, of the abovementioned alcohols with dialkyl carbonates such as dimethyl carbonate, diaryl carbonates such as diphenyl carbonate or phosgene. Particularly suitable are polycarbonate diols, especially amorphous polycarbonate diols.

Preferred poly(ether-carbonate) polyols are those as obtainable by reaction, for example, of the abovementioned alcohols with alkylene oxide and dialkyl carbonates such as dimethyl carbonate, diaryl carbonates such as diphenyl carbonate or phosgene.

Further suitable polyols may be poly(meth)acrylate polyols.

Other suitable polyols may be natural polyhydroxy-functional fats and oils, more particularly castor oil, or so-called natural oil polyols (NOP) obtained by chemical modification of unsaturated natural oils and fats, for example by epoxidation of unsaturated oils and subsequent ring opening with carboxylic acids or alcohols, respectively, or polyols obtained by hydroformylation and hydrogenation of unsaturated oils (or unsaturated triglycerides) .

Other suitable polyols may be those obtained from natural fats and oils by degradation procedures such as alcoholysis or ozonolysis and subsequent chemical linkage, by transesterification or dimerization, for example, of the resultant degradation products or derivatives thereof. Suitable degradation products of natural fats and oils are, in particular, fatty acids, fatty alcohols and also fatty acid esters, in particular the methyl esters (FAME), which may be derivatized

Likewise suitable, furthermore, may be polyhydrocarbon polyols, also called oligohydrocarbonols, examples being polyhydroxy-functional ethylene-propylene, ethylenebutylene or ethylene-propylene-diene copolymers, as produced for example by KRATON Polymers, USA, or polyhydroxy-functional copolymers of dienes such as 1,3-butanediene, isoprene, myrcene, farnesene, isobutylene or diene mixtures and optional vinyl monomers such as styrene, acrylonitrile, more particularly the polyhydroxy-functional polybutadiene polyols, polyisoprene polyols or poly(butadiene-isoprene) polyols, examples being those which are prepared by copolymerization of 1,3-butadiene and allyl alcohol and may also have been hydrogenated.

These stated polyols preferably have an average molecular weight number (Mn) of 250 to 30 000 g/mol, more particularly of 1 000 to 22 000 g/mol, and an average OH functionality in the range from 1.6 to 3.

Preferred polyols are polyester polyols and polyether polyols, more particularly polyoxyethylene polyol, polyoxypropylene polyol, and polyoxypropylene-polyoxyethylene polyol, preferably polyoxyethylene diol, polyoxypropylene diol, polyoxyethylene triol, polyoxypropylene triol, polyoxypropylene-polyoxyethylene diol and polyoxypropylene-polyoxyethylene triol.

Further to these stated polyols, it is possible to use small amounts of low molecular mass dihydric or polyhydric alcohols as chain extender such as, for example, 1,2-ethanediol, 1,2- and 1,3-propanediol, neopentyl glycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3- and 1,4-cyclohexanedimethanol, hydrogenated bisphenol A, dimeric fatty alcohols, 1,1,1-trimethylolethane, 1,1,1-trimethylolpropane, glycerol, pentaerythritol, sugar alcohols such as xylitol, sorbitol or mannitol, sugars such as sucrose, other higher polyhydric alcohols, low molecular mass alkoxylation products of the aforementioned dihydric and polyhydric alcohols, and mixtures of the aforementioned alcohols, when preparing the polyurethane polymer containing terminal isocyanate groups.

Polyisocyanates which can be used for preparing the polyurethane polymer are in particular commercial polyisocyanates, especially diisocyanates.

Suitable diisocyanates for example are 1,6-hexamethylene diisocyanate (HDI), 2-methylpentamethylene 1,5-diisocyanate, 2,2,4- and 2,4,4-trimethyl-1,6-hexamethylene diisocyanate (TMDI), 1,12-dodecamethylene diisocyanate, lysine and lysine ester diisocyanate, cyclohexane 1,3-diisocyanate, cyclohexane 1,4-diisocyanate, 1-isocyanato-3,3,5-trimethyl-5-isocyanatomethylcyclohexane (isophorone diisocyanate or IPDI), perhydro-2,4'-diphenylmethane diisocyanate and perhydro-4,4'-diphenylmethane diisocyanate, 1,4-diisocyanato-2,2,6-trimethylcyclohexane (TMCDI), 1,3- and 1,4-bis(isocyanatomethyl)cyclohexane, m- and p-xylylene diisocyanate (m- and p-XDI), m- and p-tetramethyl-1,3-xylylene diisocyanate, m- and p-tetramethyl-1,4-xylylene diisocyanate, bis(1-isocyanato-1-methylethyl)naphthalene, 2,4- and 2,6-tolylene diisocyanate (TDI), 4,4'-, 2,4'-, and 2,2'-diphenylmethane diisocyanate (MDI), 1,3- and 1,4-phenylene diisocyanate, 2,3,5,6-tetramethyl-1,4-diisocyanatobenzene, naphthalene 1,5-diisocyanate (NDI), 3,3'-dimethyl-4,4'-diisocyanatobiphenyl (TODD, oligomers and polymers of the aforesaid isocyanates, and also mixtures thereof.

The silane-functional polymer P1 has preferably the following formula (III) : 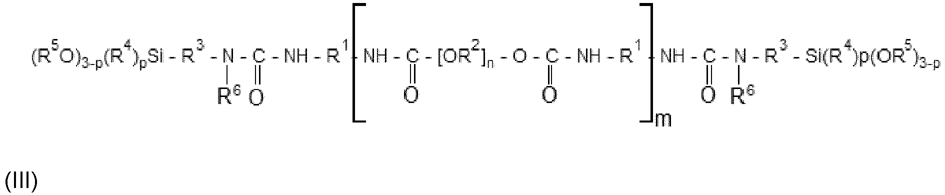 wherein:
- R¹ represents a hydrocarbon divalent radical having from 5 to 15 carbon atoms;
- R² represents a divalent alkylene radical, linear or branched, having from 2 to 4 carbon atoms;
- R³, R⁴, R⁵, R⁶ and p are each as defined herein;
- m is an integer different from 0;
- n and m are such that the number-average molecular weight of the polymer ranges from 500 g/mol to 50 000 g/mol, preferably from 700 g/mol to 22 000 g/mol.

Suitable silane-functional polymers P1 are, for example, those available commercially under the trade names Polymer ST, as for example Polymer ST50, from HANSE CHEMIE, and also under the trade name DESMOSEAL^{®} from COVESTRO.

Preferably, R¹ is chosen from the following divalent radicals, whose formulas reveal the presence of two free valences:
a) the divalent radical derived from isophorone diisocyanate (IPDI): 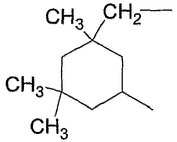
b) the divalent radical derived from dicyclohexylmethane diisocyanate (H12MDI) 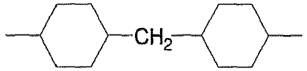
c) the divalent radical derived from toluene diisocyanate (TDI) 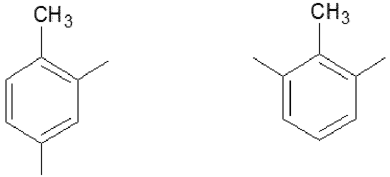
d) the divalent radicals derived from the 4,4' and 2,4'- isomers of diphenylmethane diisocyanate (MDI): 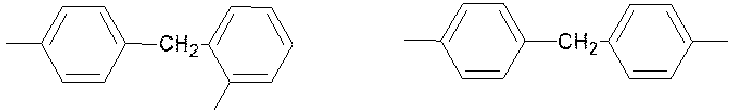
e) the divalent radical derived from hexamethylene diisocyanate (HDI):

   -(CH₂)₆-
f) the divalent radical derived from m-xylylene diisocyanate (m-XDI)

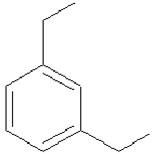

### Polymer P2

In one embodiment, the silane-functional polymer P is in the form of a silane-functional polyurethane polymer P2, obtainable by the reaction of an isocyanatosilane with a polymer which has functional end groups that are reactive toward isocyanate groups, more particularly hydroxyl groups, mercapto groups and/or amino groups.

This reaction takes may take place in a stoichiometric ratio of the isocyanate groups to the functional end groups that are reactive toward isocyanate groups of 1:1, or with a slight excess of the functional end groups that are reactive toward isocyanate groups, as for example at temperatures of 20°C to 100°C, optionally in presence of catalysts.

Preferably, the isocyanatosilane having the following formula (IV):

NCO-R³-Si(R⁴)ₚ(OR⁵)₃₋ₚ (IV)

wherein R³, R⁴, R⁵ and p are as defined above for the silane group of formula (I), including the preferred embodiments.

Examples of suitable isocyanatosilanes of the formula (IV) are isocyanato-methyltrimethoxysilane, isocyanatomethyldimethoxymethylsilane, 3-isocyanatopropyltrimethoxysilane, 3-isocyanatopropyldimethoxymethylsilane, isocyanato-methyltriethoxysilane, isocyanatomethyldiethoxymethylsilane.

As functional end groups that are reactive toward isocyanate groups, the polymer preferably contains hydroxyl groups. Polymers containing hydroxyl groups are suitably, on the one hand, high molecular mass polyoxyalkylene polyols already stated, preferably polyoxypropylene diols having a degree of unsaturation of less than 0.02 meq/g and having an average molecular weight number (Mn) in the range from 4000 to 30 000 g/mol, especially those having an average molecular weight number (Mn) in the range from 8 000 to 22 000 g/mol.

Also suitable on the other hand for reaction with isocyanatosilanes of the formula (IV) may be polyurethane polymers containing hydroxyl groups, more particularly polyurethane polymers terminated with hydroxyl groups. Polyurethane polymers of this kind are typically obtainable through the reaction of at least one polyisocyanate with at least one polyol. This reaction may be accomplished by reacting the polyol and the polyisocyanate by customary methods, as for example at temperatures of 50°C to 100°C, optionally in presence of a catalyst, the polyol being metered such that its hydroxyl groups are in a stochiometric excess in relation to the isocyanate groups of the polyisocyanate. A preferred ratio of hydroxyl groups to isocyanate groups is from 1.3:1 to 4:1, more particularly from 1.8:1 to 3:1.

Polyols and polyisocyanates suitable for this reaction are typically the same as those already mentioned as being suitable for the preparation of a polyurethane polymer containing isocyanate groups that is used for the preparation of a silane-functional polyurethane polymer P1.

The silane-functional polymer P2 has preferably the following formula (V) : 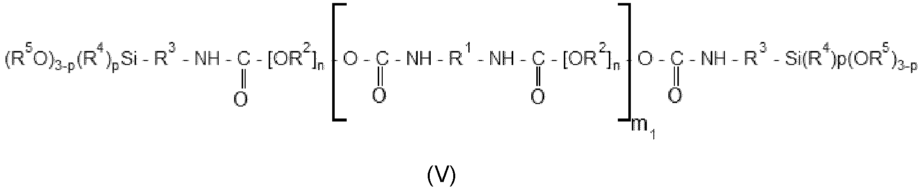 wherein:
- R¹ is a hydrocarbon divalent radical having from 5 to 15 carbon atoms;
- R² represents a divalent alkylene radical, linear or branched, having from 2 to 4 carbon atoms;
- R³, R⁴ and R⁵, p are as defined above in formula (I);
- n is an integer such that number average molecular weight of the polyether bloc -[OR²]ₙ-ranges from 300 g/mol to 30 000 g/mol in polymer of formula (V);
- m₁ is zero or an integer;
- n and m₁ are such that the number-average molecular weight of polymer of formula (V) ranges from 500 g/mol to 50 000 g/mol, preferably from 700 g/mol to 22 000 g/mol.

Preferably, R¹ is chosen from the following divalent radicals, whose formulas reveal the presence of two free valences:
a) the divalent radical derived from isophorone diisocyanate (IPDI): 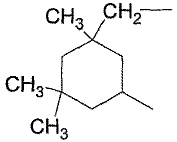
b) the divalent radical derived from dicyclohexylmethane diisocyanate (H12MDI) 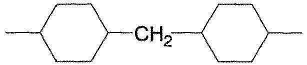
c) the divalent radical derived from toluene diisocyanate (TDI) 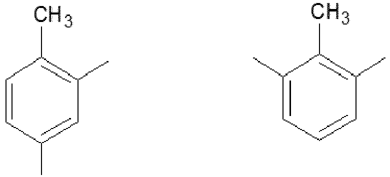
d) the divalent radicals derived from the 4,4' and 2,4'- isomers of diphenylmethane diisocyanate (MDI): 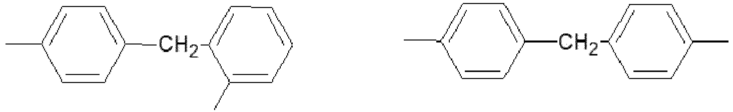
e) the divalent radical derived from hexamethylene diisocyanate (HDI):

   -(CH₂)₆-
f) the divalent radical derived from m-xylylene diisocyanate (m-XDI)

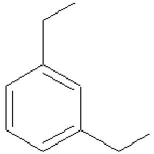

Suitable silane-functional polymers P2 for example are those available commercially under the trade names SPUR+1010LM, 1015LM, and 1050MM from MOMENTIVE, and also under the trade names GENIOSIL^{®} STP-E15, STPE-10, and STP-E35 from WACKER.

Preferred silane-functional polymers P are selected from those wherein in formula (I), (III), or (V):
- R⁵, identical or different, represents an alkyl having from 1 to 10 carbon atoms, more preferably from 1 to 5 carbon atoms;
   and/or
- R⁴, identical or different, is a linear or branched alkyl having from 1 to 10 carbon atoms; and/or
- R⁶ represents hydrogen or a linear or branched alkyl having from 1 to 20 carbon atoms:
   and/or
   - R³ represents an alkylene radical having from 1 to 6 carbon atoms;
      and/or
   - p is 0 or 1.

Even more preferred silane-functional polymers P are selected from those wherein in formulae (I), (III) or (V):
- R⁵ is methyl;
- R⁴ is methyl or ethyl;
- R⁶ is hydrogen;
- R³ is methylene or propylene;
- p is 1.

More preferably, the silane-functional polymer P is a polymer P2 having formula (V) as defined above.

Even more preferably, the silane-functional polymer P is a polymer P2 having formula (V) wherein :
- R⁵ is methyl;
- R⁴ is methyl or ethyl;
- R⁶ is hydrogen;
- R³ is methylene or propylene;
- p is 1;
- R¹, R², n and m₁ being as defined above.

### Plasticizer

A "plasticizer" as used herein refers to a substance that decreases the viscosity of the composition and thus facilitates its processability.

The plasticizer may be selected from the group consisting of carboxylic esters, phosphoric acid esters, sulfonic acid esters, hydrocarbon, glycol ether, glycol esters, polyether plasticizers, and mixtures thereof.

The carboxylic esters may be selected from the group consisting of : fatty acid esters, epoxidised fatty acid esters, benzoates, phthalates (such as for example diisononyl phthalate, diisodecyl phthalate), esters of 1,2-dicarboxy cyclohexane (such as for example diisononyl 1,2-cyclohexanedicarboxylate), adipates (such as for example dioctyl adipate), sebacates, benzoates, and mixtures thereof.

The hydrocarbon may be polybutenes or polyisobutene.

The sulfonic acid esters typically include esters of alkylsulphonic acid and phenol.

Preferably, the composition does not comprise phtalate-containing compounds, meaning in particular that the composition does not comprise phtalate-containing plasticizers.

Preferably, the plasticizer is selected from esters of 1,2-dicarboxy cyclohexane.

### Fumed silica

The fumed silica may have a BET surface area of at least 50 m²/g. Preferably, the fumed silica has a BET surface area of at least 100 m²/g, more preferably from 100 m²/g to 500 m²/g.

The BET surface area may be determined according to standard measuring methods such as DIN 66132.

Fumed (pyrogenic) silicas are prepared by means of flame hydrolysis or flame oxidation. This involves oxidizing or hydrolysing of hydrolysable or oxidizable starting materials, generally in a hydrogen/oxygen flame. Starting materials used for pyrogenic methods include organic and inorganic substances. Silicon tetrachloride is particularly suitable. As a result of the thermal process used to make fumed silica particles, fumed silica particles are by nature hydrophilic unless specifically treated.

The fumed silica may comprise hydrophobic fumed silica, hydrophilic fumed silica, or a mixture of both.

Hydrophobic fumed silica may be obtained by treating hydrophilic fumed silica with a hydrophobizing agent such as for example organosiloxane. The surface of the silica is chemically modified in the process, i.e. the hydrophobizing agent is connected to the silica by chemical bonds thereby forming a hydrophobic fumed silica.

Preferably, the hydrophobizing agents may be selected from octamethylcyclotetrasiloxane, polydimethylsiloxane, dimethylsiloxane, monomethyltrichlorosilane, dimethyldichlorosilane, trimethylchlorosilane, hexamethyldisilazane, or alkylsilanes such as but not limited to, octyltrialkoxysilanes, hexyltrialkoxysilanes. More preferably, the hydrophobizing agent is selected from octamethylcyclotetrasiloxane, alkylsilanes, dimethyldichlorosilane or hexamethyldisilazane.

The hydrophobic fumed silica has preferably a BET surface ranging from 100 m²/g to 500 m²/g, more preferably from 100 m²/g to 350 m²/g.

Non limitative commercially available examples of hydrophobic fumed silicas include: Aerosil^{®} R104, Aerosil^{®} R106, Aerosil^{®} R805, Aerosil^{®} R812, Aerosil^{®} R812S, Aerosil^{®} R202, Aerosil^{®} RY200, Aerosil^{®} RY200S, Aerosil^{®} RY50, Aerosil^{®} NY50, Aerosil^{®} RY200L, Aerosil^{®}RY300 from Evonik industries, Cab-o-sil^{®} CT-1206 or Cab-o-sil^{®} TG-3110 from Cabot Corporation, HDK^{®}-H18, HDK^{®}-H17 from Wacker Chemie AG.

The hydrophilic fumed silica has preferably a BET surface ranging from 100 m²/g to 500 m²/g, more preferably from 100 m²/g to 350 m²/g.

Hydrophilic fumed silicas are produced and sold, for example, by Nippon Aerosil Co., Ltd., in trade names of AEROSIL fumed silica, such as AEROSIL 900, AEROSIL 130, AEROSIL 200, AEROSIL 255, AEROSIL 255, AEROSIL 300, AEROSIL 380 and AEROSIL OX50, or HDK^{®}-H20 from Wacker Chemie AG.

### Calcium carbonate

The curable composition may optionally comprise calcium carbonate.

The calcium carbonate may be selected from natural, ground or precipitated calcium carbonates.

The calcium carbonate may be coated with fatty acids, especially with stearic acid.

As an example of precipitated calcium carbonate coated with fatty acids, we can mention HAKUENKA^{®} CCR-S10 (marketed by OMYA) or CALOFORTS SVt 4 (marketed by Specialty Minerals)

### Other additives

The curable composition may further contain at least one additive for example chosen from the group consisting of: pigments, dyes, adhesion promoters, solvents, drying agents, molecular sieves, antioxidant, wetting-agents, catalyst, UV absorber, thixotropic agents, filler (different from fumed silica or calcium carbonate), and mixtures thereof.

The filler different from fumed silica and calcium carbonate (if present) may be selected from the group consisting of: barium sulfate (BaSO₄, also called barite or heavy spar), calcined kaolins, aluminum oxides, aluminum hydroxides, carbon blacks, zeolithe, PVC powders or hollow beads, and mixtures thereof.

The curable composition may optionally comprise at least one thixotropic agent, such as for example polyamide waxes, bentonites, fumed silicas, organically modified castor oil and amide waxes, or combinations thereof.

The organically modified castor oil may be, for example, a hydrogenated castor oil or another castor oil derivative. One example of a commercially available organically modified castor oil is Thixatrol^{®}ST.

The curable composition may optionally comprise at least one adhesion promoters, such as for example epoxysilanes (meth)acrylosilanes, anhydridosilanes, or adducts of the aforesaid silanes with primary aminosilanes, and also aminosilanes or urea silanes.

As drying agent, mention may be made of vinyltrimethoxysilane (VTMO), vinyltriethoxysilane (VTEO), alkoxyarylsilanes such as GENIOSILO XL 70 sold by WACKER.

When a drying agent is used, its content is preferably lower than 3 wt% based on the total weight of the composition.

Among UV anti-oxidant, the following compounds may be cited : benzotriazoles, benzophenones, sterically hindered amines such as for example bis(2,2,6,6,-tetramethyl-4-piperidyl)sebaceate, and mixtures thereof.

TINUVIN^{®} 400 or TINUVIN^{™} 770 sold by BASF may be used as UV anti-oxidant.

Solvent can also be used in the curable composition, in particular for reducing its viscosity. Aliphatic or aromatic hydrocarbons, halogenated hydrocarbons, alcohols, ketones, esters, ethers may be used as solvents.

The curable composition according to the invention may include a crosslinking catalyst. The catalyst can be any catalyst known to those skilled in the art for silanol condensation. Examples of such catalysts include:
- Organic titanium derivatives such as titanium acetylacetonate (commercially available under the name TYZORO AA75 from DU PONT DE NEMOURS).
- Aluminum chelate (commercially available as K-KAT^{®} 5218 from KING INDUSTRIES).
- Amines such as 1,8-diazabicyclo[5.4.0]undec-7-ene (DBU) or 1,5-diazabicyclo[4.3.0]non-5-ene (DBN), diethyl ether-2,2'-morpholine (DMDEE), and 1,4-diazabicyclo[2.2.2]octane (DABCO).
- Tin-based catalysts such as NEOSTANN^{®} S-1 or TIB-KAT^{®} 216 (available respectively from KANEKA or TIB CHEMICALS), or even DBTL (DiButylTinLaurate), widely available in commerce.
- Zinc carboxylate and DBU-based catalysts (commercially available as K-KAT^{®} 670 from KING INDUSTRIES).

The curable composition may comprise from 0.02% to 0.5% by weight of catalyst relative to the total weight of said curable composition.

### Curable composition

The curable composition may be manufactured using known methods, for example by mixing the components in particular in a suitable dispersion unit, for example high-speed mixer.

The mixing may be carried out at a temperature comprised between 23°C and 60°C.

In a first preferred embodiment, the curable composition comprises:
- from 15% to 40 % by weight of one or several silane-functional polymer P as defined above;
- from 5% to 15% by weight of one or several plasticizer as defined above;
- from 1% to 25% by weight of fumed silica as defined above;
- from 30% to 60% by weight of calcium carbonate as defined above,
even more preferably, the curable composition comprises:
- from 15% to 40% by weight of one or several silane-functional polymer P2 as defined above;
- from 5% to 15% weight of one or several plasticizer as defined above;
- from 1% to 10% by weight of fumed silica as defined above;
- from 40% to 60% by weight of calcium carbonate as defined above.

In a second preferred embodiment, the curable composition comprises:
- from 40% to 65 % by weight of one or several silane-functional polymer P as defined above;
- from 15% to 40% by weight of one or several plasticizer as defined above;
- from 5% to 25% by weight of fumed silica as defined above;
- from 0% to 5% by weight of calcium carbonate as defined above;
even more preferably, the curable composition comprises:
- from 40% to 65% by weight of one or several silane-functional polymer P2 as defined above;
- from 15% to 40% weight of one or several plasticizer as defined above;
- from 10% to 25% by weight of fumed silica as defined above;
- from 0% to 1% by weight of calcium carbonate as defined above.

In this second preferred embodiment, the fumed silica preferably comprises less than 5% by weight of hydrophobic fumed silica based on the total weight of the fumed silica.

The curable composition of the invention is preferably moisture-curing, meaning that in the presence of water of moisture, more particularly atmospheric moisture, the hydrolysis and condensation reactions on the silane groups take place, causing crosslinking of the polymer molecules and curing of the composition. The curing is also referred as crosslinking.

The composition is preferably produced and stored in the absence of moisture. Advantageously, the composition is stable on storage, meaning that it can be kept in the absence of moisture in a suitable system, such as a cartridge, over a period ranging from several months up to a year or more, without undergoing any change in its application properties or in its properties after curing. The stability is typically determined via measurement of the viscosity or extrusion force or application rate at as specified applied pressure.

The curable composition advantageously exhibits at least one of the following advantages:
- good strength is obtained in few minutes after curing at ambient (23°C) and even at a low temperature ranging from -1°C to -25°C : this is advantageous because loads can be used rapidly on coated article or sealed substrates, there is no need to wait several days for use;
- it is transparent which is desired by end user;
- it cures at low temperature preferably ranging from -1°C to -25°C : this is advantageous for use in countries where temperatures are below 0°C, or even for applications in planes where the temperatures can be very low at high altitude.

### Methods

The present invention also relates to a method of coating a substrate comprising:
i) applying the curable composition as defined above to a substrate;
ii) curing the curable composition at a temperature ranging from -1°C to - 25°C.

The present invention also relates to a method of sealing a joint between a first substrate and a second substrate, said method comprising steps of:
a) applying the curable composition as defined above into the joint to bridge the gap between the first and second substrates,
b) curing the curable composition at a temperature ranging from -1°C to - 25°C.

The present invention also relates to a method of bonding substrates, comprising:
x) applying the curable composition as defined above to one or two substrates;
y) contacting the substrates together;
z) curing the curable composition at a temperature ranging from -1°C to - 25°C.

The substrate in each method may be selected from:
- inorganic substrates such as concrete, mortar, brick, tile, natural stone, glass, metals, and/or alloys (such as aluminum alloys, steel, non-ferrous metals, and galvanized metals).
- organic substrates like wood and/or plastics (such as PVC, polycarbonate, PMMA, polyethylene, polypropylene, polyesters, and epoxy resins).

### B. Specific curable composition C'

The present invention also relates to a curable composition C' comprising:
- from 40% to 65% by weight of one or several silane-functional polymer P comprising at least one functional group having formula (I):

   -C(O)-N(R₆)-R³-Si(R⁴)ₚ(OR⁵)₃₋ₚ (I)

   wherein
   - R⁴, identical or different, is each a linear or branched monovalent hydrocarbon radical having from 1 to 10 carbon atoms;
   - R⁵, identical or different, is each a linear or branched monovalent hydrocarbon radical having from 1 to 10 carbon atom;
   - or two radicals R⁵ may form a cycle;
   - R³ is a linear or branched divalent hydrocarbon radical having from 1 to 12 carbon atoms, optionally comprising at least one heteroatom, and optionally comprising cyclic and/or aromatic moieties;
   - R⁶ is a hydrogen atom, a linear or branched alkyl, an arylalkyl, or a cycloalkyl having from 1 to 20 carbon atoms;
   - p is 0, 1 or 2;
- from 15% to 40% by weight of one or several plasticizer;
- from 5% to 25% by weight of hydrophilic fumed silica.

For this specific curable composition C', all the embodiments, preferred embodiments regarding polymer P, formula (I), plasticizer, hydrophilic fumed silica discloses above in paragraph A.Uses, apply herein without a need to repeat all of them.

As explained above, "hydrophilic" fumed silica corresponds to an "unmodified"/"untreated" fumed silica, compared to "hydrophobic" fumed silica which typically results from hydrophilic fumed silica modified/treated with hydrophobizing agent.

Preferably, the curable composition C' comprises :
- from 40% to 65% by weight of one or several silane-functional polymer P2 having formula (V) as defined above;
- from 15% to 40% by weight of one or several plasticizer selected from the group consisting of carboxylic esters, phosphoric acid esters, sulfonic acid esters, hydrocarbon, glycol ether, glycol esters, polyether plasticizers, and mixtures thereof;
- from 5% to 25% by weight of hydrophilic fumed silica.

Preferably, the curable composition C' comprises less than 5% by weight, more preferably less than 1% by weight, or even more preferably does not comprise hydrophobic fumed silica.

The curable composition C' may further contain at least one additive for example chosen from the group consisting of: pigments, dyes, adhesion promoters, solvents, drying agents, molecular sieves, antioxidant, wetting-agents, catalyst, UV absorber, thixotropic agents, filler (different from fumed silica or calcium carbonate), and mixtures thereof.

The additives are as defined above in paragraph A. Uses.

Preferably, the curable composition C' comprises less than 5 % by weight of calcium carbonate, even more preferably less than 1% by weight based on the total weight of the composition. Even more preferably, the curable composition C does not comprise calcium carbonate.

The present invention also relates to the use of the curable composition C' for sealing, coating or bonding at a curing temperature ranging from -1°C to - 25°C.

The curable composition C' advantageously exhibits at least one of the following advantages:
- good strength is obtained in few minutes (fast strength) after curing at ambient (23°C) and even at a low temperature for example ranging from -1°C to -25°C : this is advantageous because loads can be used rapidly on coated article or sealed substrates;
- it is transparent which is desired by end user;
- it cures at low temperature preferably ranging from -1°C to -25°C : this is advantageous for use in countries where temperatures are below 0°C, or even for applications in planes where the temperatures can be very low at high altitude.

According to the present invention, by « comprised between x and y », or « ranging from x to y », it is meant a range wherein limits x and y are included. For example, the range "comprising between 1% and 3%" includes in particular 1% and 3%.

### EXPERIMENTAL PART

The following ingredients were used for the preparation of the compositions:
- Geniosil^{®} STP-E10: Dimethoxy(methyl)silylmethylcarbamate responding to formula (V) commercialized by Wacker: polymer A
- H EXAMOLL^{®} DINCH: 1,2-cyclohexane dicarboxylic acid diisononyl ester commercialized by BASF : plasticizer
- vinyltrimethoxysilane: waterscavenger;
- (3-aminopropyl)trimethoxysilane : adhesion promoter A;
- HAKUENKA^{®} CCR-S10 commercialized by OMYA: precipitated calcium carbonate coated with fatty acids, with an average particle size of 80 nm;
- OMYCARB 2T-AV: precipitated calcium carbonate (PCC) coated with fatty acids commercialized by OMYA;
- Cab-O-Sil 150 LM : hydrophilic fumed silica with BET surface of 150 g/m² : fumed silica A;
- hydrophilic fumed silica with a BET surface in the range 175-225 m²/g : fumed silica B;
- hydrophobic fumed silica with a BET surface of the hydrophobic fumed silica of 120 m²/g :
   fumed silica C.

The following compositions were prepared as follows, with the ingredients and quantities mentioned in table 1 below: The materials were blended together using a Hauschild Rotary Speedmixer (Type: DAC 600.2 VACP), resulting in material having a maximum temperature of 50°C.

**Table 1 : compositions A-1, B-1 and C-1**

| | **A-1** | **B-1** | **C-1** |
|---|---|---|---|
| Polymer A | 26 | 57 | 52 |
| Plasticizer | 9 | 20 | 30 |
| Waterscavenger | 3 | 3,5 | 2 |
| Antioxydant | 1 | 0.4 | 1 |
| Adhesion promoter A | 4 | 5 | 2 |
| organotincatalyst | 0.1 | 0.1 | 0 |
| OMYCARB 2T-AV | 23 | 0 | 0 |
| HAKUENKA^{®} CCR-S10 | 28.9 | 0 | 0 |
| Fumed silica A | 5 | 14 | 0 |
| Fumed silica B | 0 | 0 | 4 |
| Fumed silica C | 0 | 0 | 9 |
| | | | |
| total | 100 | 100 | 100 |

In table 1, proportions are indicated as weight percent for the whole composition.

### Test methods

### Transparency

Tranparency of the compositions were evaluated visually.

### Curing in Depth

All compositions were stored at -18°C. U-shaped aluminium profile was stored at -18°C. Application was carried out in a freezer at -18°C.

The cure after 24h and 5 days consists in acting on, in right-angle peeling, a flat strip of the product to be examined, of constant width and of increasing thickness. This strip was obtained by filling a U-profile, with a width of 10 mm and a depth varying linearly from 10 mm with compositions A-1, B-1 and C-1. The assembly was made of Aluminium. After application for 24 h and 5 days in a freezer at-18 °C, the level at which the product, still pasty (not polymerized over the thickness), is stuck to the assembly was recorded using graduations.

The results are quantified as follows:

| | |
|---|---|
| Bad quality (no curing) | - |
| Poor quality (curing but cheesy film with no elasticity) | + |
| Good quality (curing and firm skin with some elasticity) | ++ |
| Very good quality (curing with strong skin and very good elasticity) | +++ |

### Strength Build over time

The composition A-1 (or B-1) was applied using a metal spreader in the form of a thin film with a thickness of approximately 1 mm and 25 mm x 25 mm to a Beech Wood substrate with a length of 100 mm and a width of 25 mm. Immediately after the application of said film a second Beech Wood substrate was pressed gently with the finger on top of the film. At least 3 samples were needed to be prepared for each time interval to be measured. The prepared samples were placed in a Climate chamber at 23 °C and 50 % RH. Samples were measured after 0, 15 min, 1 hr, 2 hrs, 4 hrs, 6 hrs and 24 hrs.

The measurement of the Strength at break by a tensile test was carried out according to the protocol described below.

The principle of the measurement consists in drawing, in a tensile testing device, the movable jaw of which moves at a constant rate equal to 10 mm/minute, a test specimen consisting of the compositions as described and in recording, at the moment when the test specimen breaks, the stress applied (in MPa).

### Properties of the cured compositions

The resulting properties of compositions A-1, B-1 and C-1 can be found in table 2 below:

**Table 2**

| | **A-1** | **B-1** | **C-1** |
|---|---|---|---|
| Curing after 24h (mm) | 0.5-1 | 0.5-1 | 0.5-1 |
| Quality of the film after 24h | ++ | ++ | ++ |
| Curing after 5 days (mm) | 1-1.5 | 2 | 2 |
| Quality of the film after 5 days | +++ | +++ | +++ |
| Transparent | no | yes | yes |

The results of table 2 advantageously show that each of the compositions A-1, B-1 and C-1 exhibits a film formation after 24h of at least 0,5 mm at such low temperature of curing of - 18°C. After curing at -18°C for 5 days, the skin formation is of 2 mm for compositions B and C.

Besides, each of the compositions A, B and C leads to a film having a good quality after 24h, and even very good quality in 5 days, at such low temperature -18°C.

The results of the strength build up over time for composition A-1 and B-1 are presented in table 3 below:

| | A-1 | B-1 |
|---|---|---|
| 15 min | 0,014 N/mm² | 0,011 N/mm² |
| 30 min | 0,041 N/mm² | 0,021 N/mm² |
| 1 h | 0,174 N/mm² | 0,162 N/mm² |
| 2h | 1,530 N/mm² | 1,052 N/mm² |
| 8h | 2,319 N/mm² | 1,3 N/mm² |
| 16h | 2,648 N/mm² | 1,830 N/mm² |
| 24h | 2,709 N/mm² | 1,612 N/mm² |

Compositions A-1 and B-1 advantageously exhibits a good strength (higher than 1N/mm²) after only 2 hours at 23°C, 50% RH.

## Claims

1. Use of a curable composition for sealing, coating or bonding at a curing temperature ranging from -1°C to - 25°C,
said curable composition comprising:
- from 15% to 65% by weight of one or several silane-functional polymer P comprising at least one functional group having formula (I):
-C(O)-N(R₆)-R³-Si(R⁴)ₚ(OR⁵)₃₋ₚ (I)
wherein
- R⁴, identical or different, is each a linear or branched monovalent hydrocarbon radical having from 1 to 10 carbon atoms;
- R⁵, identical or different, is each a linear or branched monovalent hydrocarbon radical having from 1 to 10 carbon atom;
- or two radicals R⁵ may form a cycle;
- R³ is a linear or branched divalent hydrocarbon radical having from 1 to 12 carbon atoms, optionally comprising at least one heteroatom, and optionally comprising cyclic and/or aromatic moieties;
- R⁶ is a hydrogen atom, a linear or branched alkyl, an arylalkyl, or a cycloalkyl having from 1 to 20 carbon atoms;
- p is 0, 1 or 2;
- from 5% to 40% by weight of one or several plasticizer;
- from 1% to 25% by weight of fumed silica;
- optionally calcium carbonate.

2. Use according to claim 1, wherein the silane-functional polymer comprises at least two groups of formula (I), preferably located at main chain ends.

3. Use according to anyone of claim 1 or 2, wherein the silane-functional polymer P has a polyether backbone, a polyester backbone, a poly(ether-ester) backbone, a polyolefin backbone, a polycaprolactone backbone, a polycarbonate backbone, a poly(ether-carbonate) backbone, a poly(meth)acrylate backbone, a polyacetal backbone, a polythioether backbone, a polyurethane backbone, preferably the silane-functional polymer P has a polyether backbone.

4. Use according to anyone of claims 1 to 3, wherein the silane-functional polymer P is
- A silane-functional polymer P1 having the following formula (III) : 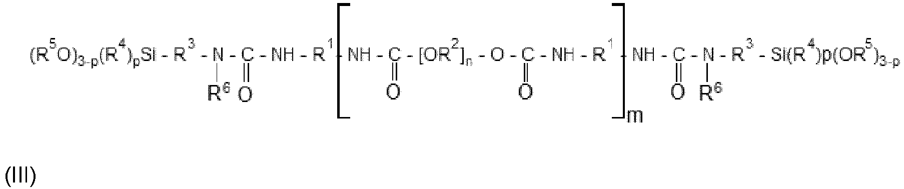 wherein:
- R¹ represents a hydrocarbon divalent radical having from 5 to 15 carbon atoms;
- R² represents a divalent alkylene radical, linear or branched, having from 2 to 4 carbon atoms;
- R³, R⁴, R⁵, R⁶ and p are each as defined herein;
- m is an integer different from 0;
- n and m are such that the number-average molecular weight of the polymer ranges from 500 g/mol to 50 000 g/mol, preferably from 700 g/mol to 22 000 g/mol;
or
- A silane-functional polymer P2 having the following formula (V) : 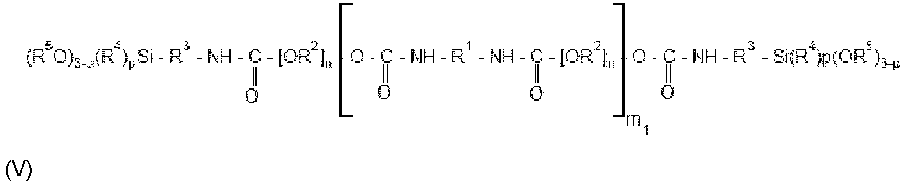 wherein:
- R¹ is a hydrocarbon divalent radical having from 5 to 15 carbon atoms;
- R² represents a divalent alkylene radical, linear or branched, having from 2 to 4 carbon atoms;
- R³, R⁴ and R⁵, p are as defined above in formula (I);
- n is an integer such that number average molecular weight of the polyether bloc -[OR²]ₙ-ranges from 300 g/mol to 30 000 g/mol in polymer of formula (V);
- m₁ is zero or an integer;
- n and m₁ are such that the number-average molecular weight of polymer of formula (V) ranges from 500 g/mol to 50 000 g/mol, preferably from 700 g/mol to 22 000 g/mol.

5. Use according to anyone of claims 1 to 4, wherein the silane-functional polymer is selected from those wherein:
- R⁵, identical or different, represents an alkyl having from 1 to 10 carbon atoms, more preferably from 1 to 5 carbon atoms;
and/or
- R⁴, identical or different, is a linear or branched alkyl having from 1 to 10 carbon atoms; and/or
- R⁶ represents hydrogen or a linear or branched alkyl having from 1 to 20 carbon atoms:
and/or
- R³ represents an alkylene radical having from 1 to 6 carbon atoms;
and/or
- p is 0 or 1.

6. Use according to anyone of claims 1 to 5, wherein the silane-functional polymer is selected from those wherein:
- R⁵ is methyl;
- R⁴ is methyl or ethyl;
- R⁶ is hydrogen;
- R³ is methylene or propylene;
- p is 1.

7. Use according to anyone of claims 1 to 6, wherein the plasticizer is selected from the group consisting of carboxylic esters, phosphoric acid esters, sulfonic acid esters, hydrocarbon, glycol ether, glycol esters, polyether plasticizers, and mixtures thereof.

8. Use according to anyone of claims 1 to 6, wherein the curable composition further contains at least one additive for example chosen from the group consisting of: pigments, dyes, adhesion promoters, solvents, drying agents, molecular sieves, antioxidant, wetting-agents, catalyst, UV absorber, thixotropic agents, filler (different from fumed silica or calcium carbonate), and mixtures thereof.

9. Use according to anyone of claims 1 to 8, wherein the curable composition comprises:
- from 15% to 40 % by weight of one or several silane-functional polymer P;
- from 5% to 15% by weight of one or several plasticizer;
- from 1% to 25% by weight of fumed silica;
- from 30% to 60% by weight of calcium carbonate.

10. Use according to anyone of claims 1 to 8, wherein the curable composition comprises:
- from 40% to 65 % by weight of one or several silane-functional polymer P ;
- from 15% to 40% by weight of one or several plasticizer;
- from 5% to 25% by weight of fumed silica;
- from 0% to 5% by weight of calcium carbonate.

11. Use according to claim 10, wherein the fumed silica comprises less than 5% by weight of hydrophobic fumed silica based on the total weight of the fumed silica.

12. Curable composition C comprising:
- from 40% to 65% by weight of one or several silane-functional polymer P comprising at least one functional group having formula (I):
-C(O)-N(R₆)-R³-Si(R⁴)ₚ(OR⁵)₃₋ₚ (I)
wherein
- R⁴, identical or different, is each a linear or branched monovalent hydrocarbon radical having from 1 to 10 carbon atoms;
- R⁵, identical or different, is each a linear or branched monovalent hydrocarbon radical having from 1 to 10 carbon atom;
- or two radicals R⁵ may form a cycle;
- R³ is a linear or branched divalent hydrocarbon radical having from 1 to 12 carbon atoms, optionally comprising at least one heteroatom, and optionally comprising cyclic and/or aromatic moieties;
- R⁶ is a hydrogen atom, a linear or branched alkyl, an arylalkyl, or a cycloalkyl having from 1 to 20 carbon atoms;
- p is 0, 1 or 2;
- from 15% to 40% by weight of one or several plasticizer;
- from 5% to 25% by weight of hydrophilic fumed silica.

13. Curable composition C according to claim 12, wherein it comprises:
- from 40% to 65% by weight of one or several silane-functional polymer P2 having formula (V) 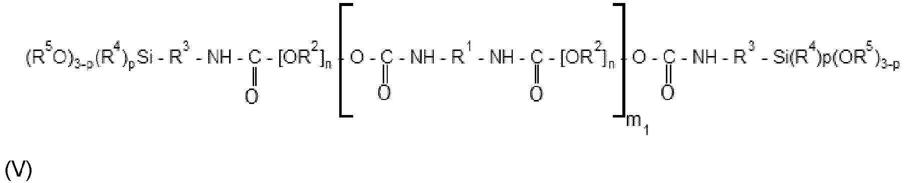 wherein:
- R¹ is a hydrocarbon divalent radical having from 5 to 15 carbon atoms;
- R² represents a divalent alkylene radical, linear or branched, having from 2 to 4 carbon atoms;
- R³, R⁴ and R⁵, p are as defined above in formula (I);
- n is an integer such that number average molecular weight of the polyether bloc -[OR²]ₙ-ranges from 300 g/mol to 30 000 g/mol in polymer of formula (V);
- m₁ is zero or an integer;
- n and m₁ are such that the number-average molecular weight of polymer of formula (V) ranges from 500 g/mol to 50 000 g/mol, preferably from 700 g/mol to 22 000 g/mol.
- from 15% to 40% by weight of one or several plasticizer selected from the group consisting of carboxylic esters, phosphoric acid esters, sulfonic acid esters, hydrocarbon, glycol ether, glycol esters, polyether plasticizers, and mixtures thereof;
- from 5% to 25% by weight of hydrophilic fumed silica.

14. Curable composition C according to anyone of claim 12 or 13, wherein it comprises less than 5% by weight, more preferably less than 1% by weight, or even more preferably does not comprise hydrophobic fumed silica.

15. A method of coating a substrate comprising:
i) applying the curable composition as defined in anyone of claims 1 to 11 or the curable composition C as defined in anyone of claims 12 to 14 to a substrate;
ii) curing the curable composition at a temperature ranging from -1°C to - 25°C.

16. A method of sealing a joint between a first substrate and a second substrate, said method comprising steps of:
a) applying the curable composition as defined in anyone of claims 1 to 11 or the curable composition C as defined in anyone of claims 12 to 14 into the joint to bridge the gap between the first and second substrates,
b) curing the curable composition at a temperature ranging from -1°C to - 25°C.

17. A method of bonding substrates, comprising:
x. applying the curable composition as defined in anyone of claims 1 to 11 or the curable composition C as defined in anyone of claims 12 to 14 to one or two substrates;
y. contacting the substrates together;
z. curing the curable composition at a temperature ranging from -1°C to - 25°C.
